# EUROPEAN PATENT APPLICATION

(11) **EP 4 671 013 A1**
(43) Date of publication of application: **31.12.2025**
(21) Application number: 24778139.6
(22) Date of filing: 28.03.2024
(51) Int. Cl.: B60J 7/02, B60J 7/00, B29C 45/14

(54) **VEHICLE, AND ROOF GLASS ASSEMBLY AND METHOD FOR MACHINING SAME**

(30) Priority: 30.03.2023 CN 202310329719
(71) Applicant: Fuyao Glass Industry Group Co., Ltd., Fuqing, Fujian 350300 (CN)
(72) Inventor: LING, Zhiwen, Fuqing, Fujian 350300 (CN); CHEN, Jie, Fuqing, Fujian 350300 (CN); YU, Jianzhao, Fuqing, Fujian 350300 (CN); LIN, Jianjian, Fuqing, Fujian 350300 (CN)
(74) Representative: Inchingalo, Simona
(86) International application number: PCT/CN2024/084403
(87) International publication number: WO 2024/199353

(57) **Abstract**

A vehicle, and a roof glass assembly (10) and a method for machining same. The roof glass assembly comprises: roof glass (11), two guide rails (12) and two hollow tubes (13), wherein both the guide rails (12) are connected to the roof glass (11) and are oppositely arranged and spaced apart from each other, at least part of each hollow tube (13) is arranged in the direction where the two guide rails (12) are spaced apart, and the tube sections are close to the same ends of the two guide rails (12); the end of each guide rail (12) close to the tube section is a first end, one end of one hollow tube (13) is arranged in a guide direction of the first end of one guide rail (12), and one end of the other hollow tube (13) is arranged in the guide direction of the first end of the other guide rail (12); and each hollow tube (13) passes through a mounting position of a driving pat (16), and each hollow tube (13) is connected, by means of injection molding, to a trim (14) arranged along an arrangement path of the hollow tube (13), and is fixed to the roof glass (11).

## Description

### CROSS REFERENCES TO RELATED APPLICATION

This application claims priority of China Patent Application No.2023103297199, filed on March 30, 2023, entitled "VEHICLE, AND ROOF GLASS ASSEMBLY AND METHOD FOR MACHINING SAME", the content of which is hereby incorporated by reference in its entirety.

### TECHNICAL FIELD

The present disclosure relates to the technical field of automobile sunroofs, and in particular to a vehicle, a roof glass assembly and a processing method thereof.

### BACKGROUND

With the development of the vehicle field, more and more models choose to use glass on the roof to broaden the field of vision. The larger the proportion of roof glass, the wider the field of vision of the vehicle. However, in some scenarios, such as hot summer, the direct light from the roof glass will affect the driving comfort in the car, so the roof sunshade came into being. The sunshade can be selectively opened as needed. The sunshade is generally equipped with structures such as guide rails to enable it to move smoothly in a specific direction. And if the sunshade is to be automatically turned on and off, the corresponding actuator and other structures are also required. In general, these functions require a large number of components to cooperate with each other, which will greatly occupy the space in the car and reduce the proportion of space for the driver and passengers to move.

### SUMMARY

According to various embodiments of the present disclosure, a vehicle, a roof glass assembly and a processing method thereof are provided.

A roof glass assembly includes:
a roof glass;
two guide rails connected to the roof glass, and the two guide rails being spaced apart and opposite to each other; and
two hollow tubes, at least a partial section of each hollow tube is arranged along a spacing direction of the two guide rails, and the partial section is adjacent to same ends of the two guide rails. An end of each guide rail adjacent to the partial section is a first end, an end of one hollow tube is arranged along a guide direction of the first end of one guide rail, and an end of another hollow tube is arranged along the guide direction of the first end of another guide rail;
each hollow tube passes through an actuator installation position, and each hollow tube is injection-molded to an encapsulation arranged along an arrangement path of the hollow tube and is fixed on the roof glass.

In one of the embodiments, a spacing B between each hollow tube and the roof glass is no greater than 6.5 mm.

In one of the embodiments, the spacing B between an end of each hollow tube and the roof glass is in a range from 2mm to 6.5mm.

In one of the embodiments, the hollow tube is provided with a plurality of process clamping positions, the plurality of process clamping positions are spaced apart from each other sequentially along the arrangement path of the hollow tube, and the process clamping positions of the hollow tube are not covered by the encapsulation.

In one of the embodiments, the actuator installation position is located between the two guide rails.

Each hollow tube includes two straight tube sections connected to two sides of the actuator installation position, respectively, and the straight tube sections are arranged along the spacing direction of the two guide rails.

Another end of each straight tube section opposite to an end thereof connected to the actuator installation position is in communication with a curved tube section.

Two curved tube sections of each hollow tube are a starting curved section and a middle curved section, respectively, and the starting curved section of one of the hollow tubes and the middle curved section of another one of the hollow tubes are located on a same side of the actuator installation position.

An end of one starting curved section that is not in communication with the straight tube section is arranged along a guide direction of one guide rail, and an end of another starting curved section that is not in communication with the straight tube section is arranged along a guide direction of another starting curved section.

Ends of the two middle curved sections that are not in communication with the straight tube section are in communication with two extended tube sections, the two extended tube sections are arranged along the guide direction of the guide rails, and the two guide rails are located between the two extended tube sections.

The straight tube section, the curved tube sections, and each of the extended tube sections are each provided with the process clamping position.

In one of the embodiments, both the straight tube section and the extended tube section are provided with the process clamping position that is no greater than 30 mm away from an end of the curved tube section;
and/or, a radius of curvature of any point on a curved path of the curved tube section is no less than 65 mm.

In one of the embodiments, the guide rail is integrally injection-molded to the roof glass through the encapsulation, part of an encapsulation material is located between the guide rail and the roof glass, and a thickness F of the part of the encapsulation material is in a range from 1 mm to 4 mm.

In one of the embodiments, a sliding slot is formed inside the guide rail. The sliding slot has an opening along the guide direction of the guide rail, and a side wall of the sliding slot is integrally injection-molded to the roof glass through the encapsulation. An anti-overflow stopper is provided between a portion of the side wall where the opening is formed and the roof glass, and the encapsulation is located on a side of the anti-overflow stopper away from the opening.

In one of the embodiments, the hollow tube is partially inserted into a guide channel inside the guide rail, an insertion depth G of the hollow tube is greater than 10 mm, and a concentricity error between the hollow tube and the guide channel is ±0.3;
or, the hollow tube is spaced apart from the guide rail, and a spacing between the hollow tube and the guide rail along the guide direction of the guide rail is in a range from 1 mm to 3 mm.

In one of the embodiments, the roof glass assembly further includes an actuator, a sunshade and two tension cables. The actuator is installed at the actuator installation position. The fixed shaft of the sunshade is arranged along the spacing direction of the two guide rails, and the fixed shaft is located at an end of the two guide rails away from the first end. Two ends of a moving edge of the sunshade are capable of being inserted into the two guide rails and are capable of sliding in the two guide rails, respectively. Each tension cable is arranged in a guide passage formed by corresponding matching of the hollow tube and the guide rail. An end of one tension cable is connected to one end of the moving edge of the sunshade, and an end of another tension cable is connected to another end of the moving edge of the sunshade. The actuator is in transmission cooperation with the two tension cables, so as to drive the two tension cables to slide along an arrangement path thereof.

In one of the embodiments, a dynamic friction coefficient µ between the hollow tube and the two tension cable is in a range from 0.1 to 0.3.

A method for processing a roof glass assembly is provided. The roof glass assembly is the aforementioned roof glass assembly. The method includes the following steps of:

Pressing each process clamping position of the hollow tube onto a clamping jaw of an encapsulation mold. The hollow tube, the encapsulation mold and the roof glass jointly enclose an injection molding space.

Injecting an encapsulation material into the injection molding space, and forming the encapsulation of the roof glass assembly after the encapsulation material solidifies.

In one of the embodiments, the method for processing the roof glass assembly further includes the following steps of:
Prior to injecting the encapsulation material into the injection molding space, plugging sealing plugs at ends of each hollow tube.

A vehicle includes the aforementioned roof glass assembly.

The details of one or more embodiments of the present disclosure are set forth in the accompanying drawings and the description below. Other features, objects and advantages of the present disclosure will become apparent from the description, drawings and claims.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a bottom view of a roof glass assembly according to an embodiment.
FIG. 2 is a partial enlarged view of the roof glass assembly shown in FIG. 1.
FIG. 3 is a cross-sectional view along line B1-B1 in FIG. 2.
FIG. 4 is a cross-sectional view along line B1-B1 according to another embodiment.
FIG. 5 is a cross-sectional view along line B1-B1 according to yet another embodiment.
FIG. 6 is a cross-sectional view along line B3-B3 in FIG. 1.
FIG. 7 is a cross-sectional view along line B2-B2 in FIG. 2.
FIG. 8 is a cross-sectional view along line B2-B2 according to another embodiment.
FIG. 9 is a partial enlarged view of the assembly position of a hollow tube and a guide rail in the roof glass assembly according to an embodiment.
FIG. 10 is a partial enlarged view of the assembly position of the hollow tube and the guide rail in the roof glass assembly according to another embodiment.
FIG. 11 is a partial cross-sectional view of the clamping jaw and the hollow tube when the clamping jaw and the hollow tube are cooperated.
FIG. 12 is a partial enlarged view of a sealing plug when the sealing plug is installed at an end of the hollow tube.
FIG. 13 is a cross-sectional view of the sealing plug when the sealing plug is installed at the end of the hollow tube.
FIG. 14 is a schematic diagram of the sealing plug according to an embodiment.

Description of the Reference Numerals:
10: A roof glass assembly; 11: two guide rails and two hollow tubes roof glass; 111: actuator installation position; 12: guide rail; 121. sliding slot; 122: guide channel; 123: upper side wall; 13: hollow tube; 131: process clamping position; 132: straight tube section; 133: starting curved section; 134: middle curved section; 135: extended tube section; 14: encapsulation; 15: anti-overflow stopper; 16: actuator; 17: sunshade; 171: moving edge; 172: fixed shaft; 18: glue; 20: clamp; 30: sealing plug.

### DETAILED DESCRIPTION OF THE EMBODIMENTS

In order to make the aforementioned objects, features and advantages of the present disclosure more clearly understood, the specific embodiments of the present disclosure will be described in detail below with reference to the accompanying drawings. In the following description, numerous specific details are set forth in order to provide a thorough understanding of the present disclosure. However, the present disclosure can be implemented in many other ways different from those described herein, and those skilled in the art can make similar improvements without departing from the connotation of the present disclosure. Therefore, the present disclosure is not limited by the specific embodiments disclosed below.

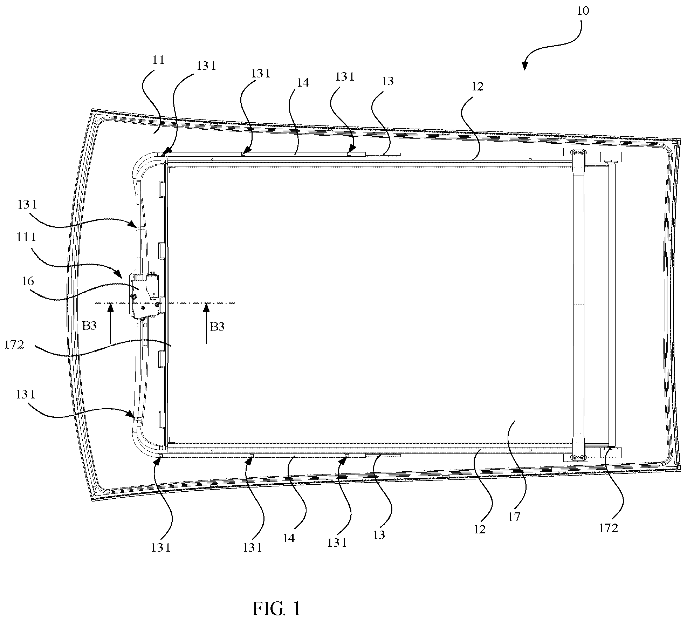

As shown in FIG. 1, according to some embodiments of the present disclosure, a roof glass assembly 10 is provided, including a roof glass 11, two guide rails 12, and two hollow tubes 13. Further, in some embodiments, the roof glass assembly 10 further includes a sunshade 17 and two tension cables (not shown).

The two guide rails 12 of the roof glass assembly 10 are both connected to the roof glass 11, and the two hollow tubes 13 are both connected to the roof glass 11. The two guide rails 12 are spaced apart and opposite to each other, and a spacing region between the two guide rails 12 is a region that can be shielded by the sunshade 17 that is expanded.

At least a partial section of each hollow tube 13 is arranged along a spacing direction of the two guide rails 12, and the partial section is adjacent to the same ends of the two guide rails 12. One end of each of the guide rails 12 adjacent to the portion of the hollow tubes 13 is the first end, and the other end of each of the guide rails 12 is the second end. An end of one hollow tube 13 is arranged along a guiding direction of the first end of one guide rail 12, and an end of the other hollow tube 13 is arranged along the guiding direction of the first end of the another guide rail 12. Arranged along the guide direction of the first end of the guide rail 12 means that an extension line extending from the first end along the guide direction of the guide rail 12 passes through this position, such that the tension cable extending from the first end of the guide rail 12 is capable of being inserted into the corresponding hollow tube 13, and the direction of the tension cable after the transition from the guide rail 12 to the hollow tube 13 is determined by the hollow tube 13.

One hollow tube 13 and one guide rail 12 are matched to form a guide passage, and each guide passage is provided with a tension cable. An end of one tension cable is connected to one end of a moving edge 171 of the sunshade 17, and an end of the other tension cable is connected to the other end of the moving edge 171 of the sunshade 17. When the tension cable moves in a guide channel 122, the moving edge 171 of the sunshade 17 slides along the guide direction of the guide rail 12, such that the sunshade 17 can switch between an expanded state and a retracted state.

Furthermore, as shown in FIG. 1 to FIG. 5, each hollow tube 13 passes through an actuator installation position 111. The actuator installation position 111 is configured to install an actuator 16, such as a motor. The tension cable extending through the hollow tube 13 passes through the actuator installation position 111 and is in transmission cooperation with the actuator 16. When the actuator 16 is powered on, it can drive the tension cable to slide along its own arrangement path. In other words, the tension cable can slide in the hollow tube 13 and the guide rail 12.

Each hollow tube 13 is injection-molded to an encapsulation 14 arranged along an arrangement path of the hollow tube 13 and is fixed on the roof glass 11. For example, the hollow tube 13, the encapsulation 14, and the roof glass 11 can be integrally injection-molded and connected together, or the hollow tube 13 is first injection-molded to the encapsulation 14, and then the encapsulation 14 is adhered to the roof glass 11.

A region defined by the two guide rails 12 and the hollow tube 13 together is a region covered by the sunshade 17 when it is expanded. Two ends of the moving edge 171 of the sunshade 17 are inserted into the two guide rails 12 and is capable of sliding in the two guide rails 12, respectively. Both ends of the moving edge 171 of the sunshade 17 is capable of being connected to the tension cable, and the tension cable is capable of extending through the hollow tube 13. When the actuator 16 is powered on, the tension cable is movable along the hollow tube 13 and the guide rail 12, thereby controlling a switch of the sunshade 17. Since the hollow tube 13 is injection-molded to the encapsulation 14 arranged along its own arrangement path and is fixed on the roof glass 11, an overall thickness of the roof glass assembly 10 is small, and a space occupancy rate is low, thereby increasing the proportion of the space for the driver and passengers to move.

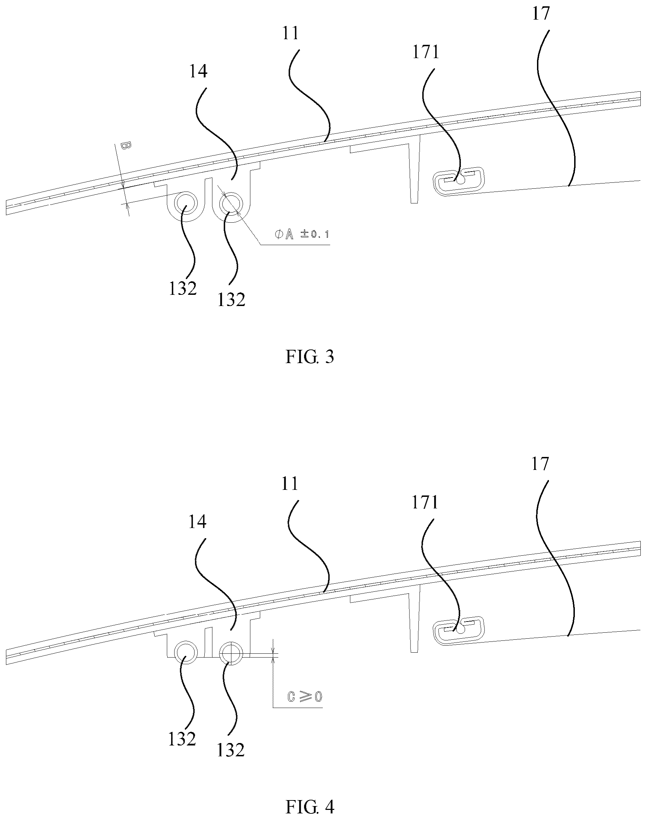

Specifically, in one embodiment, as shown in FIG. 3, the hollow tube 13 and the encapsulation 14 are injection-molded together, and no additional crossbeam is required to fix the encapsulation 14. A spacing B between an end of each hollow tube 13 and the roof glass 11 is no greater than 6.5 mm, which greatly reduces a thickness of the roof glass assembly 10. There is only the encapsulation 14 between the hollow tube 13 and the roof glass 11, the thickness B of the encapsulation 14 can be precisely controlled. It is only necessary to accurately define the relative position between the hollow tube 13 and the roof glass 11 during injection molding, which has high operational feasibility.

More specifically, in some embodiments, the spacing B between an end of each hollow tube and the roof glass 11 is in a range from 2mm to 6.5mm. For example, the spacing B between an end of the hollow tube 13 corresponding to the guide rail 12 that forms the guide passage and the roof glass is in a range from 2mm to 6.5mm. If the spacing B between the hollow tube 13 and the roof glass 11 is too small, there is less encapsulation material here, and there may be a problem of unreliable fixation. If the spacing B between the hollow tube 13 and the roof glass 11 is too large, the thickness of the roof glass assembly 10 will be larger. Accordingly, the spacing B is limited to the aforementioned range to take into account the connection reliability and thickness requirements.

If a guide member is further provided on the crossbeam after a crossbeam is provided to limit the tension cable such that the tension cable is arranged according to a specified route, an overall thickness of the crossbeam and the guide member may need to reach 10mm, making the entire roof glass assembly thicker. In the present disclosure, the hollow tube 13 is injection-molded to the encapsulation 14, and the spacing B between at least one end of the hollow tube 13 and the roof glass 11 can be controlled within the aforementioned range, not only a height of the hollow tube 13 is reduced, but also a height of the guide rail 12 corresponding to the hollow tube 13 can be reduced.

As shown in FIG. 3, in some embodiments, the two hollow tubes 13 are fully wrapped in the encapsulation 14. In a cross section obtained by cutting the hollow tube 13 by a cross section perpendicular to the axial direction of the hollow tube 13, a circle corresponding to the hollow tube 13 is completely located in the encapsulation 14.

As shown in FIG. 4, in other embodiments, the two hollow tubes 13 are half-wrapped in the encapsulation 14. In the cross section obtained by cutting the hollow tube 13 by the cross section perpendicular to the axial direction of the hollow tube 13, the circle corresponding to the hollow tube 13 is partially located in the encapsulation 14.

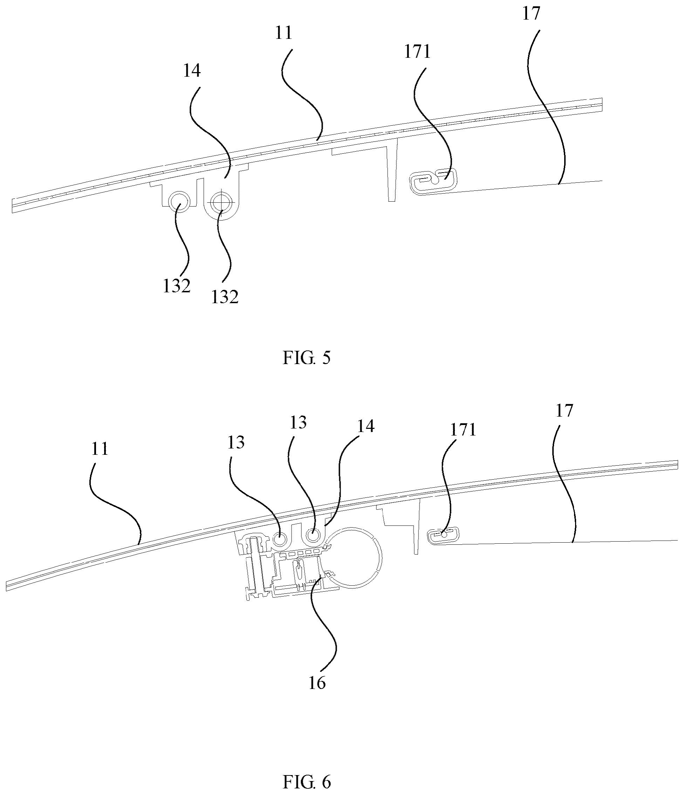

As shown in FIG. 5, in some other embodiments, one hollow tube 13 is fully wrapped in the encapsulation 14, and the other hollow tube 13 is half-wrapped in the encapsulation 14.

In some embodiments, a dynamic friction coefficient µ between the hollow tube 13 and the two tension cable is in a range from 0.1 to 0.3, such that the tension cable can slide more smoothly in the hollow tube 13, therefore reducing the noise when the sunshade 17 is switched, and improving the sound quality of the vehicle.

As shown in FIG. 3, in some embodiments, an inner diameter tolerance of the hollow tube 13 meets φA±0.1mm. When the tolerance is met, the spacing B between an end of the hollow tube 13 and the roof glass 11 is in a range from 2mm to 6.5mm.

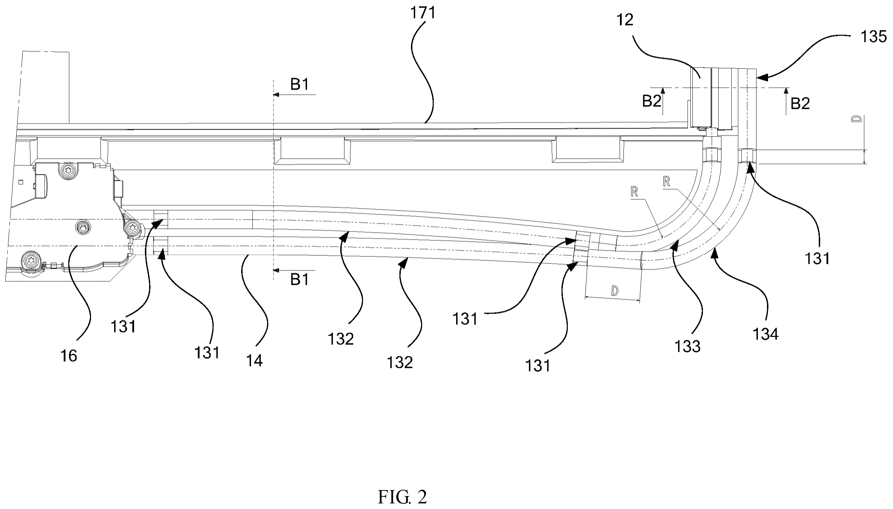

More specifically, as shown in FIG. 1 and FIG. 2, the actuator installation position 111 is located between the two guide rails 12.

Each hollow tube 13 includes two straight tube sections 132 that are connected to two sides of the actuator installation position 111, respectively, and the straight tube sections 132 are arranged along the spacing direction of the two guide rails 12.

The other end of each straight tube section 132 opposite to an end thereof that is connected to the actuator installation position 111 is in communication with one of the curved tube sections.

Two curved tube sections of each hollow tube 13 are a starting curved section 133 and a middle curved section 134, respectively, and the starting curved section 133 of one hollow tube 13 and the middle curved section 134 of the other hollow tube 13 are located on the same side of the actuator installation position 111.

An end of one starting curved section 133 that is not in communication with the straight tube section 132 is arranged along the guide direction of one guide rail 12, and an end of the other starting curved section 134 that is not in communication with the straight tube section 132 is arranged along a guide direction of another guide rail 12.

Ends of the two middle curved sections 134 that are not in communication with the straight tube section 132 are in communication with two extended tube section 135. The two extended tube sections 135 are arranged along the guide direction of the guide rails 12, and the two guide rails 12 are located between the two extended tube sections 135.

Each hollow tube 13 includes two straight tube sections 132, an extended tube section 135, and two curved tube sections. The starting curved section 133, the two straight tube sections 132, the middle curved section 134 and the extended tube section 135 are arranged in sequence, and the four are connected and arranged along an L-shaped route.

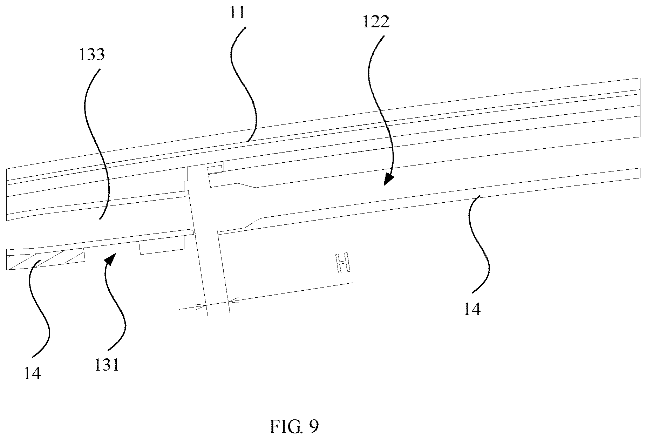

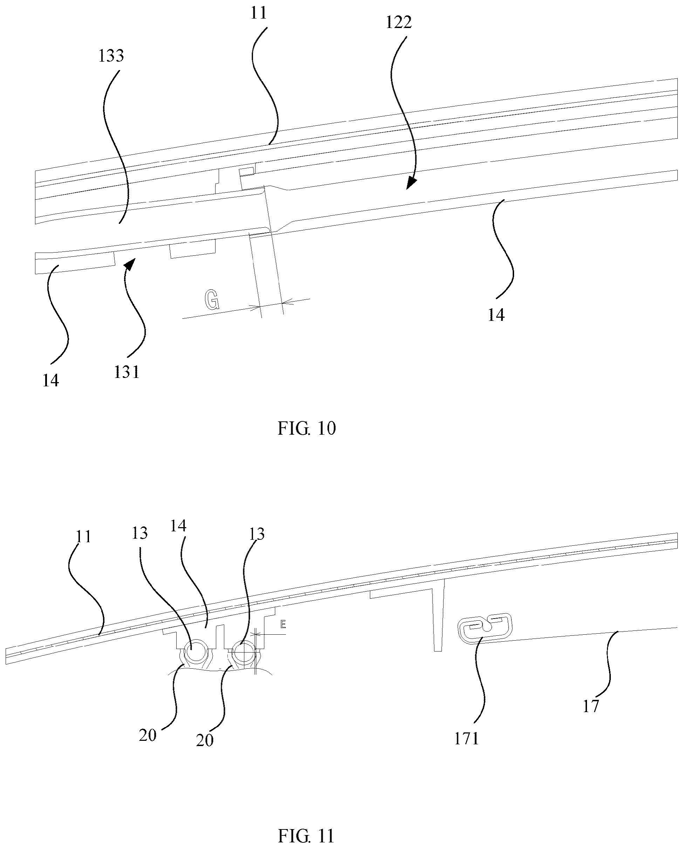

The starting curved section 133 is arranged corresponding to the guide rail 12, such that the tension cable is capable of transiting from the guide rail 12 to the starting curved section 133. Specifically, as shown in FIG. 9 and FIG. 10, the starting curved section 133 can be inserted into the guide channel 122 of the guide rail 12, or the starting curved section 133 may be spaced apart from the guide rail 12. It should be noted that in FIG. 2, the straight tube section 132, the curved tube section, and the extended tube section 135 are all wrapped in the encapsulation 14, so from an angle shown in the figure, except for the process clamping position 131 exposed in the encapsulation 14, the other portions of the hollow tube 13 are all located in the encapsulation 14 and cannot be observed.

The actuator 16 may be injection-molded to the encapsulation 14 in a similar manner to the hollow tube 13, and then fixed to the actuator installation position 111 on the roof glass 11.

Alternatively, as shown in FIG. 1, FIG. 2 and FIG. 6, the actuator 16 is fastened to the encapsulation 14 by a bolt. As shown in FIG. 6, an insert (not shown in the figure) is provided in the encapsulation 14, and the bolt (not shown in the figure) extends through the actuator and cooperates with the insert by thread, such that the actuator 16 is fixed to the encapsulation.

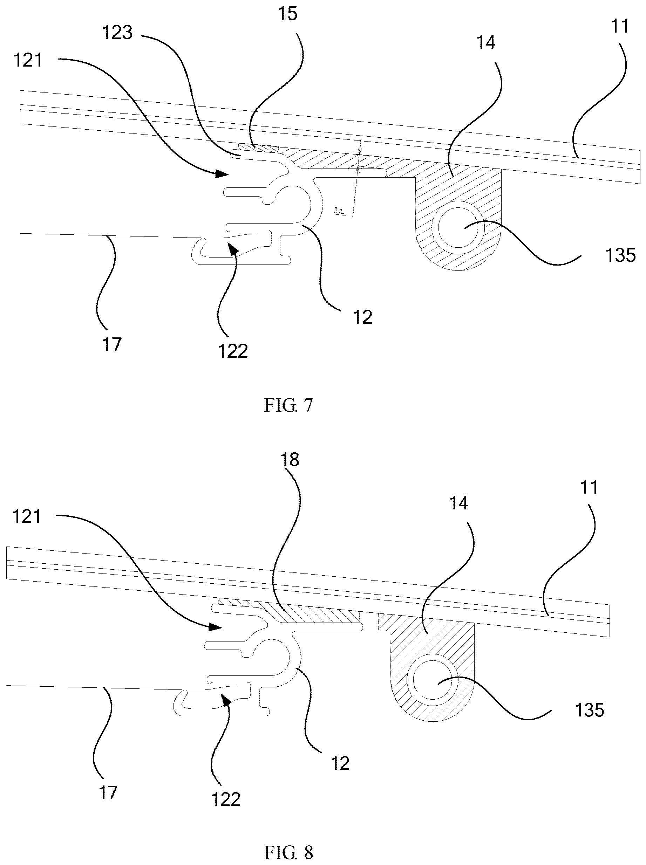

Similarly, as shown in FIG. 7, in an embodiment, the guide rail 12 is injection-mold to the encapsulation 14 and is fixed on the roof glass 11, and a portion of an encapsulation material is located between the guide rail 12 and the roof glass 11. As shown in FIG. 8, in another embodiment, the guide rail 12 is adhered to the roof glass 11 by glue 18.

As shown in FIG. 7, when the guide rail 12 is integrally injection-molded to the roof glass 11 through the encapsulation 14, the guide rail 12 needs to enclose an injection molding space together with the roof glass 11, the hollow tube 13 and the encapsulation mold during the injection molding process. After the encapsulation material is injected into the injection molding space, in order to prevent the encapsulation material from overflowing, an anti-overflow stopper 15 may be provided between the guide rail 12 and the roof glass 11.

Specifically, in one embodiment, as shown in FIG. 7, the anti-overflow stopper 15 is located on a side of the guide rail 12 away from the hollow tube 13. The encapsulation material between the guide rail 12 and the roof glass 11 is blocked by the anti-overflow stopper 15 on a side adjacent to the hollow tube 13.

Moreover, as shown in FIG. 7, in some embodiments, a sliding slot 121 is formed inside the guide rail 12, and the sliding slot 121 has an opening along the guide direction of the guide rail 12. The sliding slot 121 may be used as the guide channel 122, the tension cable extends through the sliding slot 121, and both ends of the moving edge 171 of the sunshade 17 are located in the sliding slot 121. Of course, the sliding slot 121 may also be used in other occasions where guidance is required. A side wall of the sliding slot 121 and the roof glass 11 are integrally injection-molded through the encapsulation 14. The side wall is an upper side wall 123 of the guide rail 12. The anti-overflow stopper 15 is provided between a portion of the upper side wall 123 where the opening is formed and the roof glass 11. The encapsulation 14 is located on a side of the anti-overflow stopper 15 away from the opening. The anti-overflow stopper 15 blocks the encapsulation material on a side away from the opening, thereby preventing the encapsulation material from entering the sliding slot 121 during injection molding. Specifically, the anti-overflow stopper 15 may be foam.

Further, as shown in FIG. 7, in some embodiments, a thickness F of the part of the encapsulation material between the guide rail 12 and the roof glass 11 is in a range from 1 mm to 4 mm, which can not only play a connecting role, but also prevent the roof glass assembly 10 from being thicker due to the thicker thickness of the encapsulation material.

As shown in FIG. 10, in some embodiments, the hollow tube 13 is partially inserted into the guide channel 122 in the guide rail 12. An insertion depth G of the hollow tube 13 is greater than 10 mm, ensuring that the two can fit closely. A concentricity error between the hollow tube 13 and the guide channel 122 is ±0.3 to prevent abnormal noise when the tension cable slides at a transition position between the two.

Alternatively, in other embodiments, as shown in FIG. 9, the hollow tube 13 and the guide rail 12 are spaced apart, and a spacing between the hollow tube 13 and the guide rail 12 along the guide direction of the guide rail 12 is in a range from 1 mm to 3 mm. As such, even if there is a concentricity deviation between the hollow tube 13 and the guide channel 122 in the guide rail 12, the spacing between the two can absorb the deviation to avoid abnormal noise when the tension cable slides.

Further, as shown in FIG. 1 and FIG. 2, in some embodiments, a plurality of process clamping positions 131 are provided on the hollow tube 13. The plurality of process clamping positions 131 are arranged in sequence along the arrangement path of the hollow tube 13, and the process clamping positions 131 of the hollow tube 13 are not covered by the encapsulation 14.

As shown in FIG. 11, the process clamping position 131 is configured to be clamped by a clamping jaw 20. When the encapsulation 14 is injected, a direction of the hollow tube 13 is determined by each clamping jaw 20. For example, a plurality of clamping jaws 20 are provided on the encapsulation mold, and the plurality of clamping jaws 20 are spaced apart from each other. The arrangement path of the plurality of clamping jaws 20 is the arrangement path of the hollow tube 13. After the encapsulation 14 is injected, the clamping jaw 20 can be removed from the hollow tube 13, such that the portion previously clamped by the clamping jaw 20 will not be covered by the encapsulation 14. When the clamping jaw 20 clamps the hollow tube 13, the clamping jaw 20 and the hollow tube 13 can be interference fit. In some cases, a specific interference amount E between the two is in a range from 0.2 mm to 0.5 mm.

As shown in FIG. 3, in one embodiment, other regions of the hollow tube 13 except the process clamping position 131 are fully wrapped in the encapsulation 14.

Alternatively, in another embodiment, as shown in FIG. 4, the other regions of the hollow tube 13 except the process clamping position 131 are half-wrapped in the encapsulation 14. In order to ensure that the hollow tube 13 can be wrapped by the encapsulation 14 and does not fall off, a depth of the hollow tube 13 embedded in the encapsulation 14 is greater than a radius of the hollow tube 13.

Alternatively, as shown in FIG. 5, the other regions of one of the hollow tubes 13 except the process clamping position 131 are half-wrapped in the encapsulation 14, and the other regions of another one of the hollow tube 13 except the process clamping position 131 are fully wrapped in the encapsulation 14.

As shown in FIG. 1 and FIG. 2, the process clamping position 131 is provided on each straight tube section 132, the curved tube section, and the extended tube section 135, so as to ensure that the hollow tube 13 can be arranged according to the target path.

In an embodiment, both the straight tube section 132 and the extended tube section 135 are provided with the process clamping position 131 that is no greater than 30 mm away from an end of the curved tube section, so as to ensure that the curved tube section can be arranged according to the target bending angle.

A radius of curvature R of any point on a curved path of the curved tube section is no less than 65 mm, so as to ensure that the tension cable can slide smoothly in the curved tube section without causing the tension cable to be blocked due to the excessive change in angle per unit length of the curved tube section.

In an embodiment, as shown in FIG. 1, a fixed shaft 172 of the sunshade 17 is arranged along the spacing direction of the two guide rails 12, and the fixed shaft 172 is located at an end of the two guide rails 12 away from the first end, that is, the second end. The actuator 16 is in transmission cooperation with the two tension cables to drive the two tension cables to slide along their own arrangement path.

The sunshade 17 in the rolled-up state is located at an end of the guide rail 12 away from the actuator 16, and the sunshade 17 in the expanded state shields the region surrounded by the two guide rails 12 and the hollow tube 3.

Furthermore, in some embodiments of the present disclosure, a method for processing the roof glass assembly 10 is provided, and the roof glass assembly 10 is the aforementioned roof glass assembly 10, and the method includes the following steps.

As shown in FIG. 11, each process clamping position 131 of the hollow tube 13 is pressed onto the clamping jaw 20 of an encapsulation mold, and the hollow tube 13, the encapsulation mold and the roof glass 11 jointly enclose an injection molding space.

The encapsulation material is injected into the injection molding space, and the encapsulation 14 of the roof glass assembly 10 is formed after the encapsulation material solidifies.

The clamping jaw 20 fixes the hollow tube 13 in the encapsulation mold, and then the relative position of the hollow tube 13, the encapsulation mold and the roof glass 11 is fixed to form an injection molding space.

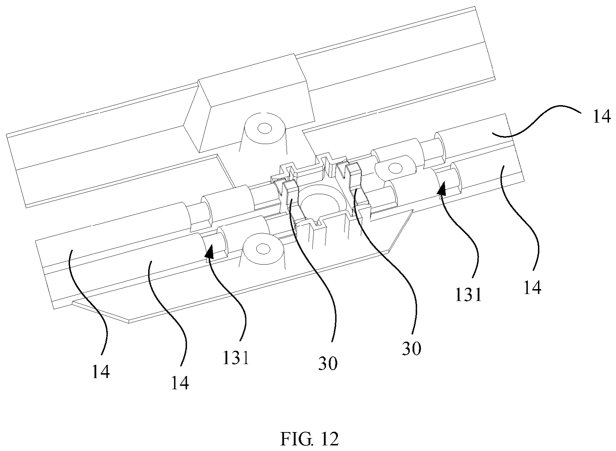

Further, as shown in FIG. 12 to FIG. 14, the method for processing the roof glass assembly also includes the following steps.

Prior to injecting the encapsulation material into the injection molding space, ends of each hollow tube 13 is plugged with sealing plugs 30 to prevent the encapsulation material from entering the hollow tube 13.

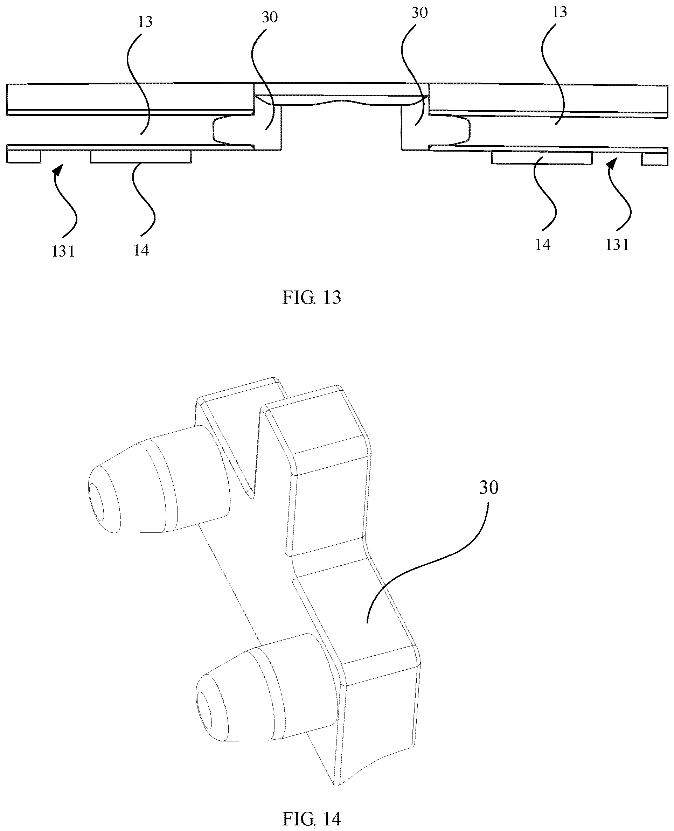

As shown in FIG. 12 and FIG. 14, the hollow tube 13 is interrupted at the actuator installation position 111, and the two hollow tubes 13 are fixed in relative position at the disconnected openings here, and the sealing plug 30 for blocking the two openings is formed together, and the two openings are blocked at one time, which is convenient for disassembly and assembly.

As shown in FIG. 7, the method for processing the roof glass assembly also includes the following steps.

An anti-overflow stopper 15 is provided between the guide rail 12 and the roof glass 11, and the anti-overflow stopper 15, the guide rail 12, the roof glass 11, the hollow tube 13 and the encapsulation mold jointly enclose the injection molding space.

In some other embodiments of the present disclosure, a vehicle is provided, including the aforementioned roof glass assembly 10. The roof glass assembly 10 may be a sunroof assembly, in other words, the roof glass 11 is a sunroof glass, and the sunroof glass on the vehicle can be opened and closed and arranged on the vehicle roof.

Optionally, the roof glass 11 may also be a fixed glass fixed to the roof, in which case the relative position between the roof glass 11 and the vehicle body is fixed.

In the description of the present disclosure, it should be understood that if the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc. appear, the orientation or position relationship indicated by these terms is based on the orientation or position relationship shown in the accompanying drawings, which is only for the convenience of describing the present disclosure and simplifying the description, and does not indicate or imply that the device or element referred to must have a specific orientation, be constructed and operated in a specific orientation, and therefore cannot be understood as a limitation on the present disclosure.

In addition, if the terms "first" and "second" appear, these terms are only used for descriptive purposes and cannot be understood as indicating or implying relative importance or implicitly indicating the number of technical features indicated. Thus, a feature delimited with "first" or "second" may expressly or implicitly include at least one of that feature. In the description of the present disclosure, if the term "a plurality of" appears, the meaning of "a plurality of" is at least two, such as two, three, etc., unless otherwise clearly and specifically defined.

In the present disclosure, unless otherwise clearly specified and limited, if the terms "mount", "connect together", "connect", "fix", etc. appear, these terms should be understood in a broad sense. For example, it can be a fixed connection, a detachable connection, or an integrated connection; it can be a mechanical connection or an electrical connection; it can be a direct connection or an indirect connection through an intermediate medium, it can be the internal connection of two elements or the interaction relationship between two elements, unless otherwise clearly defined. For ordinary technical people in the art, the specific meaning of the aforementioned terms in the present disclosure can be understood according to the specific circumstances.

In the present disclosure, unless otherwise clearly specified and limited, if there is a description that a first feature is "on" or "below" a second feature, etc., or similar description, it may mean that the first feature and second feature are in direct contact, or the first feature and second feature are in indirect contact through an intermediate medium. Also, the first feature is "above", "over" and "on" the second feature may mean that the first feature is directly above or obliquely above the second feature, or simply means that the first feature has a higher level than the second feature. The first feature being "below", "beneath" and "under" the second feature may mean that the first feature is directly or obliquely below the second feature, or simply means that the first feature has a lower level than the second feature.

It should be noted that if an element is referred to as being "fixed to" or "disposed on" another element, it may be directly on the other element or there may be a central element. If an element is considered to be "connected to" another element, it may be directly connected to the other element or there may be a central element at the same time. If present, the terms "vertical", "horizontal", "upper", "lower", "left", "right" and similar expressions used in the present disclosure are for illustrative purposes only and do not represent the only implementation method.

The technical features of the aforementioned embodiments may be combined arbitrarily. To simplify the description, not all the possible combinations of the technical features in the aforementioned embodiments are described. However, all of the combinations of these technical features should be considered as within the scope of the present disclosure, as long as such combinations do not contradict with each other.

The above embodiments merely illustrates several embodiments of the present disclosure, and the description thereof is specific and detailed, but it shall not be constructed as limiting the scope of the disclosure. It should be noted that, for a person of ordinary skill in the art, several variations and improvements may be made without departing from the concept of the present disclosure, and these are all within the protection scope of the present disclosure. Therefore, the protection scope of the present disclosure shall be subject to the appended claims.

## Claims

1. A roof glass assembly, comprising:
a roof glass;
two guide rails connected to the roof glass, and the two guide rails being spaced apart and opposite to each other; and
two hollow tubes, at least a partial section of each hollow tube being arranged along a spacing direction of the two guide rails, wherein the partial section is adjacent to same ends of the two guide rails, an end of each guide rail adjacent to the partial section is a first end, an end of one hollow tube is arranged along a guide direction of the first end of one guide rail, and an end of another hollow tube is arranged along the guide direction of the first end of another guide rail;
wherein each hollow tube passes through an actuator installation position, and each hollow tube is injection-molded to an encapsulation arranged along an arrangement path of the hollow tube and is fixed on the roof glass.

2. The roof glass assembly according to claim 1, wherein a spacing B between each hollow tube and the roof glass is no greater than 6.5 mm.

3. The roof glass assembly according to claim 2, wherein the spacing B between an end of each hollow tube and the roof glass is in a range from 2mm to 6.5mm.

4. The roof glass assembly according to claim 1, wherein the hollow tube is provided with a plurality of process clamping positions, the plurality of process clamping positions are spaced apart from each other sequentially along the arrangement path of the hollow tube, and the process clamping positions of the hollow tube are not covered by the encapsulation.

5. The roof glass assembly according to claim 4, wherein the actuator installation position is located between the two guide rails;
wherein each hollow tube comprises two straight tube sections connected to two sides of the actuator installation position, respectively, and the straight tube sections are arranged along the spacing direction of the two guide rails;
wherein another end of each straight tube section opposite to an end thereof connected to the actuator installation position is in communication with a curved tube section;
wherein two curved tube sections of each hollow tube are a starting curved section and a middle curved section, respectively, and the starting curved section of one hollow tube and the middle curved section of another hollow tube are located on a same side of the actuator installation position;
wherein an end of one starting curved section that is not in communication with the straight tube section is arranged along a guide direction of one guide rail, and an end of another starting curved section that is not in communication with the straight tube section is arranged along a guide direction of another guide rail;
wherein ends of the two middle curved sections that are not in communication with the straight tube section are in communication with two extended tube sections, the two extended tube sections are arranged along the guide direction of the guide rails, and the two guide rails are located between the two extended tube sections;
wherein the straight tube sections, the curved sections, and the extended tube sections are each provided with the process clamping position.

6. The roof glass assembly according to claim 5, wherein both the straight tube section and the extended tube section are provided with the process clamping position that is no greater than 30 mm away from an end of the curved tube section;
and/or a radius of curvature of any point on a curved path of the curved tube section is no less than 65 mm.

7. The roof glass assembly according to any one of claims 1 to 5, wherein the guide rail is integrally injection-molded to the roof glass through the encapsulation, part of an encapsulation material is located between the guide rail and the roof glass, and a thickness F of the part of the encapsulation material is in a range from 1 mm to 4 mm.

8. The roof glass assembly according to claim 7, wherein a sliding slot is formed inside the guide rail, the sliding slot has an opening along the guide direction of the guide rail, a side wall of the sliding slot is integrally injection-molded to the roof glass through the encapsulation, an anti-overflow stopper is provided between a portion of the side wall where the opening is formed and the roof glass, and the encapsulation is located on a side of the anti-overflow stopper away from the opening.

9. The roof glass assembly according to any one of claims 1 to 5, wherein the hollow tube is partially inserted into a guide channel inside the guide rail, an insertion depth G of the hollow tube is greater than 10 mm, and a concentricity error between the hollow tube and the guide channel is ±0.3;
or, the hollow tube is spaced apart from the guide rail, and a spacing between the hollow tube and the guide rail along the guide direction of the guide rail is in a range from 1 mm to 3 mm.

10. The roof glass assembly according to any one of claims 1 to 5, further comprising an actuator, a sunshade, and two tension cables, wherein the actuator is installed at the actuator installation position, a fixed shaft of the sunshade is arranged along the spacing direction of the two guide rails, the fixed shaft is located at an end of the two guide rails away from the first end, two ends of a moving edge of the sunshade are capable of being inserted into the two guide rails and are capable of sliding in the two guide rails, respectively, each tension cable is arranged in a guide passage formed by corresponding matching of the hollow tube and the guide rail, an end of one tension cable is connected to one end of the moving edge of the sunshade, an end of another tension cable is connected to another end of the moving edge of the sunshade, and the actuator is in transmission cooperation with the two tension cables, so as to drive the two tension cables to slide along an arrangement path thereof.

11. The roof glass assembly according to claim 10, wherein a dynamic friction coefficient µ between the hollow tube and the two tension cables is in a range from 0.1 to 0.3.

12. A method for processing the roof glass assembly according to any one of claims 4 to 6, the method comprising the following steps of:
pressing each process clamping position of the hollow tube onto a clamping jaw of an encapsulation mold, wherein the hollow tube, the encapsulation mold, and the roof glass jointly enclose an injection molding space; and
injecting an encapsulation material into the injection molding space, and forming the encapsulation of the roof glass assembly after the encapsulation material solidifies.

13. The method for processing the roof glass assembly according to claim 12, further comprising the following steps of:
prior to injecting the encapsulation material into the injection molding space, plugging sealing plugs at ends of each hollow tube.

14. A vehicle, comprising the roof glass assembly according to any one of claims 1 to 11.
